# EUROPÄISCHE PATENTSCHRIFT

(11) **EP 1 557 347 B1**
(45) Veröffentlichungstag und Bekanntmachung des Hinweises auf die Patenterteilung: **05.03.2008**
(21) Anmeldenummer: 04106380.1
(22) Anmeldetag: 08.12.2004
(51) Int. Cl.: B62D 65/18

(54) **Montageanordnung für Kraftwagen mit einem auf einem ortsfesten Gleittisch laufenden "Werkerband" bzw. Gleitgurt.**
Mounting arrangement for vehicles including a conveyor belt running on a slide plate.
Dispositif de montage d'un véhicule avec convoyeur à bande glissant sur un plateau.

(30) Priorität: 20.01.2004 DE 102004002750
(43) Veröffentlichungstag der Anmeldung: 27.07.2005
(73) Patentinhaber: ContiTech Transportbandsysteme GmbH, 30165 Hannover (DE)
(72) Erfinder: Möschen, Michael, 37124 Rosdorf (DE)
(74) Vertreter: Finger, Karsten

(56) Entgegenhaltungen:
- EP-A- 1 142 805
- DE-A1- 10 062 465
- DE-U1- 20 208 385
- US-A- 5 411 279

## Beschreibung

Die Erfindung betrifft eine Montageanordnung mit mindestens einem sogenannten "Werkerband", d. h. einem Gurt, der auf mindestens einem ortsfesten Gleittisch abläuft, gemäß dem Oberbegriff des Anspruchs 1.

### Stand der Technik

1. Vormontierte und bereits mit Rädern versehene Personenkraftwagen werden für die Endbearbeitung auf sogenannte "Werkerbänder" gestellt. Diese Werkerbänder weisen auf ihrer Laufseite eine Gleitlage insbesondere auf der Basis textilen Materials auf, mit deren Hilfe sie auf einem ortsfesten Gleittisch entlang gleiten können. Auf der Tragseite werden die fertig zu montierenden Personenwagen wahlweise mittels sogenannter "Radstopper" fixiert. Dabei wird das Werkerband durch die zu bearbeitenden Fahrzeuge im Bereich der Radstandsflächen punktuell belastet. Diese punktuelle Belastung des Werkerbandes geht einher mit punktuell erhöhter Friktion zwischen dem umlaufenden Werkerband und dem ortsfesten Gleittisch, auf dem das Werkerband abläuft. Dies hat zur Folge, dass bei als Gleitgurte verwendeten Werkerbändern mit fest darauf angebrachten Radstoppern im Bereich der Radstandsflächen punktuell ein vorzeitiges Durchscheuern der textilen Gleitlage eintritt. Ein weiterer Nachteil besteht in einer erhöhten Leistungsaufnahme in den Antrieben. Auch können diverse Betriebsstörungen auftreten: Quietschgeräusch und Band-Ruckeln; selbst Band-Stillstand ist nicht auszuschließen.
Zusammenfassend ist festzuhalten: Die punktuell erhöhte Friktion zwischen Werkerband (Gleitgurt) und Gleittisch tritt vorzugsweise bei Gurten mit fest vorgegebenen Belastungspunkten insbesondere "Radstoppern" auf. Durch diese Radstopper sind die jeweiligen Radstandsflächen festgelegt. Je stärker (häufiger oder höher) die Belastung, desto früher der Ausfall durch vorzeitiges Durchscheuern der Gleitlage des gegenüber dem jeweils ortsfesten Gleitboden vorwärtsbewegten Gleitgurtes.

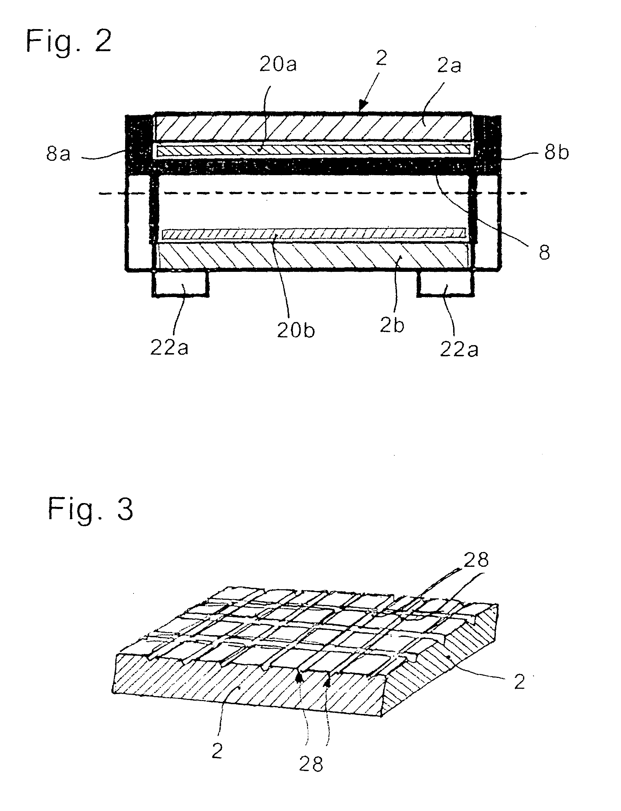

2. Um das gefürchtete Durchscheuern im Bereich der Radauflageflächen zu verhindern, befindet sich gemäß DE 100 62 465 A1 zwischen dem endlosen Werkerband (Gleitgurt) und dem Gleittisch ein endloser Verschleißgurt, der ebenfalls als Gleitgurt ausgebildet ist. Beim Betrieb der Anordnung wird dieser Verschleißgurt vom Werkerband mitgenommen und bewegt sich mit der gleichen Geschwindigkeit mit, so dass zwischen Werkerband und Verschleißgurt kein Verschleiß durch gleitende Reibung auftritt. Wegen gleitender Reibung kann jedoch Verschleiß an der Grenzfläche Verschleißgurt/Gleittisch auftreten. Gleitgurt und Verschleißgurt unterscheiden sich in ihrer Länge voneinander. Daraus ergibt sich, dass beim nächsten und allen folgenden Umläufen Werkerband und Verschleißband nicht wieder an exakt gleicher Stelle miteinander in Kontakt gelangen. D. h.: Der Verschleißgurt läuft auf einem unterschiedlichen Umfang zum Werkerband ab, so dass bei dem nächsten Umlauf nicht wieder an exakt gleicher Stelle eine Beaufschlagung durch das stehende Fahrzeug erfolgt. Da Werkerbänder fast ausschließlich an den Radaufstandsflächen belastet werden, ergibt sich somit ein ständiger Wechsel der Belastungs- und damit Verschleißpunkte an der Unterseite des Verschleißgurtes. Wegen dieses ständigen Wechsels der jeweiligen Verschleißpunkte tritt somit ein verzögerter Verschleiß ein. Das bedeutet, dass die Nutzungsdauer der Werkerband-Anordnung mit Hilfe des mindestens einen Verschleißgurtes erhöht ist.
Da die als Verschleißgurte ausgebildeten Gleitgurte üblicherweise lediglich die Breite der Aufstandsflächen aufweisen (siehe Fig. 3b), muss das Werkerband (der Hauptgurt) ebenfalls mit einer Verschleißlage versehen sein, denn ein Großteil des Werkerbandes gleitet ebenfalls auf dem Gleittisch entlang. Auch wenn beim Hauptgurt die Abnutzung durch Reibung auf dem Gleittisch nicht so groß ist, wie bei dem durch Aufstandsflächen belasteten Verschleißgurt, so ergibt sich auch beim Hauptgurt ein vorzeitiger Verschleiß aufgrund des Gleitens auf der Unterlage. Dies ist aus mehreren Gründen unerwünscht:
Der Hauptgurt stellt einen beträchtlichen Kostenanteil an einer Werkerbandanlage dar, so dass seine Erneuerung unter Wirtschaftlichkeitsgesichtspunkten keinesfalls vernachlässigbar gering ist. Außerdem ist das Auswechseln des gesamten Hauptgurtes sehr zeitaufwendig. D. h.: Die mit der Werkerbandanlage laufende Kfz-Fertigung muss für längere Zeit unterbrochen werden.
Zudem werden in der praktischen Anwendung teilweise Antriebstrommeln mit keramischer Beschichtung eingesetzt. Durch die höhere Antriebsleistung der keramischen Trommel wird die mechanische Belastung der Trommellager, Getriebe und Motoren reduziert. Dieser harte Werkstoff wirkt ebenfalls lebensdauerverkürzend auf die Gleitlage des Werkerbandes und damit lebensdauerverkürzend auf das gesamte Werkerband (Hauptgurt, Transportband).

### Aufgabe der Erfindung

Aufgabe der Erfindung ist es, eine Montageanordnung mit Werkerband zu beschreiben, bei der ein möglichst geringer Verschleiß und damit eine möglichst lange Lebensdauer des Werkerbandes zu erwarten ist.

### Lösung und Vorteile

Die Aufgabe wird im Wesentlichen mit den Merkmalen des Anspruchs 1 gelöst; die Unteransprüche nennen bevorzugte Details und Weiterbildungen.

Der Kern der Erfindung besteht darin, dass die Montageanordnung so gestaltet ist, dass der Hauptgurt während des Betriebs an keiner Stelle mit dem mindestens einen Gleittisch in Berührung kommen kann. Da der Hauptgurt aus diesem Grunde keinerlei gleitender Reibung unterliegt, gibt es somit auch keinen diesbezüglichen Verschleiß am Hauptgurt. Aus diesem Grunde braucht der Hauptgurt auch keinerlei Gleitlage aufzuweisen sondern kann durchgängig aus Gummi oder elastomerem Kunststoff bestehen, denn seine Lebensdauer ist nicht von der Lebensdauer einer (dünnen) Gleitlage abhängig. Da auf die Anbringung einer Gleitlage verzichtet werden kann, ist dieser Hauptgurt auch preiswerter in der Herstellung.

Weil sich die elastomeren Oberflächen (Laufseite des Werkerbandes und Tragseite des Verschleißgurtes) direkt berühren, erhöht sich die Friktion und damit verbessert sich die Mitnahme des Verschleißgurtes durch den Hauptgurt. Erbenfalls erhöht sich die Friktion zwischen Hauptgurt und Antriebstrommel.
Da auf eine Gleitoberfläche auf der Basis textilen Materials bewusst verzichtet werden kann, ist es nun auch erstmals möglich, insbesondere die laufseitige Oberfläche mit einer beliebigen Struktur (z. B. einem Profil) zu versehen. Damit ist eine weitere Verbesserung der Griffigkeit gegenüber dem Verschleißgurt gegeben. Auf einen separaten Antrieb für den Verschleißgurt kann deshalb verzichtet werden.

Ist der Verschleißgurt nebst Gleittisch schmaler als der Hauptgurt, so ist der seitlich überstehende Bereich des Hauptgurtes vorzugsweise durch Tragrollen abzustützen oder durch Trittleisten abzudecken.
Anstelle von zwischen Gleittisch und Trommeln einzufügenden Gleitleisten können ebenfalls Rollen angebracht werden.

Die Verschleißarmut des Werkerbandes macht sich insbesondere bei Antriebstrommeln aus keramischem Werkstoff bemerkbar.
An dem Gleittisch angebrachte Seitenleisten sorgen für eine zuverlässige Längsführungsbegrenzung der beiden Gurte.

### Zeichnungen

Ein Ausführungsbeispiel des erfindungsgemäßen Werkerbandes und zwei Beispiele gemäß dem nächstkommenden Stand der Technik sind in den Zeichnungen dargestellt und in der nachfolgenden Beschreibung näher erläutert. Es zeigt:
Fig. 1 die Prinzipdarstellung einer erfindungsgemäßen Werkerbandanordnung von der Seite betrachtet;
Fig. 2 dieselbe Werkerbandanordnung im Querschnitt dargestellt (Schnitt AA');
Fig. 3 ein Werkerband, ausschnittsweise, in perspektivischer Sicht (profilierte Laufseite);
Fig. 4 und 5a Prinzipdarstellungen von herkömmlichen Werkerbandanordnungen in Seitenansicht;
Fig. 5b die Werkerbandanordnung gemäß Fig. 5a von vorne betrachtet.

### Beschreibung

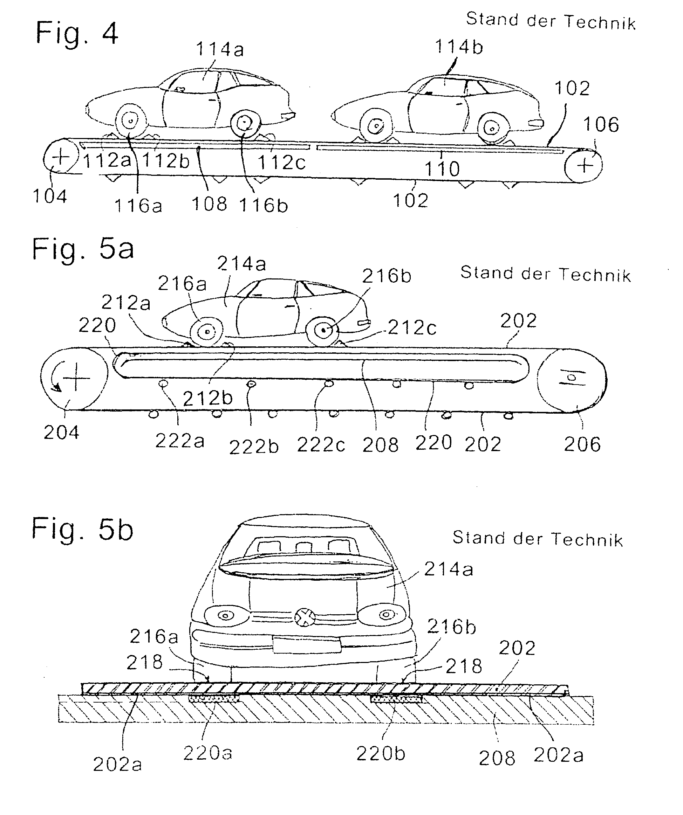

Die in Fig. 4 dargestellte herkömmliche Anordnung (siehe auch Stand der Technik 1 ) besteht aus einem endlosen sogenannten Werkerband (Gleitgurt) 102, das über zwei Rollen (Trommeln) 104, 106 läuft, von denen die eine als Antriebsrolle 104 dient. Der vorlaufende Abschnitt des Werkerbandes 102 wird von zwei Gleittischen 108, 110 unterstützt. Auf dem Werkerband 102 sind sogenannte Radstopper 112a, 112b, ... zur Arretierung von bereits (fast) fertig montierten und mit eigenen Rädern 116a, 116b, ... versehenen Personenkraftwagen 114a, 114b, ... aufvulkanisiert oder aufgeklebt.
Während des Betriebs gleitet das Werkerband (der Gleitgurt) 102 über die Gleittische 108, 110. Wegen der punktuellen Belastung unter den Rädern 116a, 116b, ... kommt es an den Belastungspunkten zu erhöhtem Verschleiß. Dadurch ist die Lebensdauer herkömmlicher Werkerbänder 102 stark eingeschränkt.

Im Unterschied zu der in Fig. 4 dargestellten Konstruktion weist die in Fig. 5a/b gezeigte Vorrichtung einen zwischen Werkerband 202 und Gleittisch 208 angeordneten Verschleißgurt 220 auf. Dieser Verschleißgurt 220 ist ebenso wie der Gleitgurt 202 endlos ausgebildet und wird über die Rollen 222a, 222b, ... geführt. Die Länge des Verschleißgurtes 220 weicht von der Länge des Werkerbandes (Gleitgurtes) 202 ab. Dies hat zur Folge, dass bei jedem Umlauf ein jeweils wechselnder Abschnitt des Verschleißgurtes 220 der Unterseite der Werkerbandes 202 gegenübersteht. Damit wechseln insbesondere auch die Belastungen im Bereich der Radaufstandsflächen.
Wie aus der Betrachtung in Fahrtrichtung (Fig. 5b) zu entnehmen, ist der Gleitgurt 220 (Fig. 5a) zweiteilig, wovon jeder Teilgurt 220a bzw. 220b jeweils eine Spur (Radaufstandsfläche 218) der zu bearbeitenden, ein- bis n-spurigen Fahrzeuge 214a, ... bzw. Transportgegenstände unterstützt. Bezüglich der restlichen Breite gleitet das Werkerband 202 direkt auf dem Gleittisch 208 entlang. Aus diesem Grunde ist das Werkerband 202 - ebenso wie der Verschleißgurt 220 bzw. die Verschleißgurte 22a, 220b - laufseitig mit einer Gleitlage 202a aus textilem Material versehen.

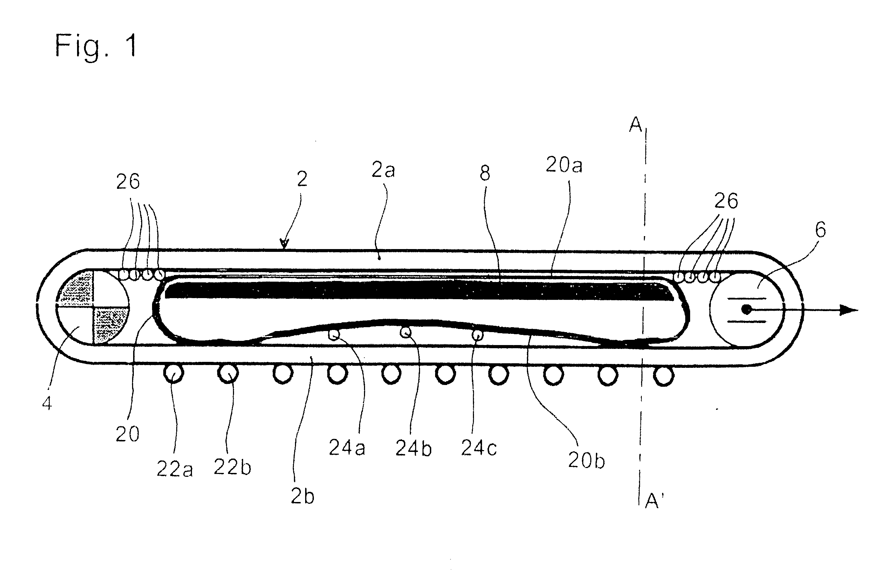

Die in Fig. 1 gezeigte erfindungsgemäße Anordnung ist weitgehend mit der in Fig. 5a/5b dargestellten Anordnung vergleichbar. Auch hier gibt es ein Werkerband 2, welches über Rollen (Trommeln) 4, 6 läuft, wovon eine Rolle 4 ebenfalls als Antriebsrolle dient. Und auch hier wird das Werkerband 2 durch einen Gleittisch 8 unterstützt.
Ein wesentlicher Unterschied zu den beiden herkömmlichen Anordnungen (Fig. 4/5) besteht darin, dass das erfindungsgemäße Werkerband 2 in keiner Weise als Gleitgurt dient. Zwischen Werkerband 2 und Gleittisch 8 erstreckt sich über die gesamter Breite ein Verschleißgurt 20.
Dieser Verschleißgurt 20 ist ebenso wie der Gleitgurt 2 endlos ausgebildet und wird über die Rollen 24a, 24b, ... gefährt.
Die Länge des Verschleißgurtes 20 weicht von der Länge des Werkerbandes (Gleitgurtes) 2 ab. Dies hat zur Folge, dass bei jedem Umlauf ein jeweils wechselnder Abschnitt des Verschleißgurtes 20 der Unterseite des Werkerbandes 2 gegenübersteht. Damit wechseln insbesondere auch die Belastungspunkte im Bereich der Radaufstandsflächen.
Das Untertrum 2b des Werkerbandes 2 wird - ebenso wie das Untertrum 20b des Verschleißgurtes - durch Rollen 22a, 22b, ... abgestützt.
Am Obertrum 2a sind die Auf- und Ablaufzonen mit Rollenunterstützung versehen, d. h. der Zwischenraum zwischen Antriebsrolle 4 und Spannrolle 6 einerseits und Verschleißgurt 20 andererseits ist ebenfalls mit Tragrollen 26 ausgefüllt.

Die in Fig. 2 im Querschnitt dargestellte Montageanordnung zeigt außer Obertrum 2a und Untertrum 2b eines Werkerbandes 2 nebst Tragrollen 22a, 22b, ... auch einen Gleitgurt 20a/20b. Das Obertrum 20a dieses Gleitgurtes wird von einem Gleittisch 8 abgestützt. Außerdem zeigt die Abbildung, dass der Gleittisch 8 Seitenleisten 8a, 8b aufweist. Diese Seitenleisten 8a, 8b dienen zur seitlichen Führungsbegrenzung von Werkerband 2 und Verschleißgurt 20.

Aus der Fig. 3 geht hervor, dass das Werkerband 2 keinerlei Gleitlage aufweist. Statt dessen ist im vorliegenden Ausführungsbeispiel die Laufseite wahlweise mit einer Struktur 28 versehen.

### Bezugszeichenliste

### a) Stand der Technik 1

- 102: Werkerband (Gleitgurt)
- 104, 106: Rollen, Trommeln (für Werkerband)
- 104: Antriebsrolle, Antriebstrommel (für Werkerband)
- 106: Spanntrommel (für Werkerband)
- 108, 110: Gleittisch(e)
- 112a, 112b, ...: Radstopper
- 114a, 114b, ...: Personenkraftwagen, Fahrzeug(e)
- 116a,116b, ...: Räder
- 128: Haftgummi
- 130: Zugträgerseile, Stahlseile
- 132a, 132b: (Stahlcord-)Querverstärkung
- 134: Deckplatte
- 136: (Polyester-)Gleitgewebelage
- 13 8a, 13 8b: Querverstärkung
- 140: Zwischenschicht
- 142: Vollgummikante

### b) Stand der Technik 2

- 202: Werkerband
- 202a: Gleitlage
- 204, 206: Rollen, Trommeln (für Werkerband)
- 204: Antriebsrolle, Antriebstrommel (für Werkerband)
- 206: Spanntrommel (für Werkerband)
- 208: Gleittisch
- 212a, ...: Radstopper
- 214a: Personenkraftwagen, Fahrzeug
- 216a, ...: Räder
- 218: Radaufstandsfläche
- 220; 220a, 220b: Verschleißgurt
- 222a, 222b, ...: Rollen

### c) Erfindung

- 2: Werkerband, Hauptgurt
- 2a: Obertrum des Werkerbandes, ... des Hauptgurtes
- 2b: Untertrum des Werkerbandes, ... des Hauptgurtes
- 4,6: Rollen, Trommeln
- 4: Antriebsrolle, Antriebstrommel
- 6: Spanntrommel
- 8: Gleittisch
- 8a, 8b: Seitenleisten
- 20: Verschleißgurt, Verschleißband
- 20a: Obertrum des Verschleißgurtes
- 20b: Untertrum des Verschleißgurtes
- 22a, 22b, ...: Tragrollen des Werkerbandes
- 24a, 24b, ...: Tragrollen des Verschleißgurtes
- 26: Tragrollen
- 28: laufseitige Struktur am Werkerband, ... Hauptgurt
- 30: Gleitlagengewebe des Verschleißgurtes
- AA': Querschnitt durch eine Werkerbandanordnung

## Patentansprüche

1. Montageanordnung mit mindestens einem endlosen, als "Werkerband" dienenden Hauptgurt (2),
- der zwischen einer Antriebstrommel (4) und einer Spanntrommel (6) auf mindestens einem ortsfesten Gleittisch (8, ...) abläuft, und
wobei zwischen Hauptgurt (2) und dem mindestens einen Gleittisch (8, ...) mindestens ein mit der Geschwindigkeit des Hauptgurtes (2) mitlaufender, endloser Verschleißgurt (20,...) angeordnet ist,
**dadurch gekennzeichnet,**
- **dass** im Fall eines einzigen Verschleißgurtes (20) und eines einzigen Gleittisches (8) dieser Verschleißgurt (20) mindestens so breit ist wie der Gleittisch (8),
- **dass** im Fall eines einzigen Verschleißgurtes (20) und mehrerer Gleittische (8, ...) dieser Verschleißgurt (20) mindestens so breit ist wie der breiteste der Gleittische (8, ...),
- **dass** im Fall mehrerer Verschleißgurte (20, ...) und mehrerer Gleittische (8, ...) der schmalste der Verschleißgurte (20, ...) mindestens so breit ist wie der breiteste der Gleittische (8, ...), und/oder
- **dass** im Fall eines einzigen Verschleißgurtes (20) der Hauptgurt (2) höchstens so breit ist wie der Verschleißgurt (20), wobei sich die Breite des Verschleißgurtes (20) über die gesamte Breite des Hauptgurtes (2) erstreckt, bzw. bei mehreren Verschleißgurten (20, ...):
- **dass** der Hauptgurt (2) höchstens so breit ist wie der schmalste der Verschleißgurte (20, ...), wobei sich die Breite des schmalsten der Verschleißgurte (20, ...) über die gesamte Breite des Hauptgurtes (2) erstreckt und
- **dass** zwischen dem trommelseitigen Ende des mindestens einen Verschleißgurtes (20, ...) und der benachbarten Antriebstrommel (4) und/oder Spanntrommel (6) mindestens eine Tragrolle (26, ...) angeordnet ist.

2. Montageanordnung nach Anspruch1,
**dadurch gekennzeichnet,**
**dass** ein über die Breite des mindestens einen Verschleißgurtes (20, ...) und über die Breite des mindestens einen Gleittisches (8, ...) hinausragender Bereich des Hauptgurtes (2) durch Tragrollen abgestützt oder durch Trittleisten abgedeckt ist.

3. Montageanordnung nach einem der Ansprüche 1 bis 2,
**dadurch gekennzeichnet,**
**dass** die laufseitige Oberfläche des Hauptgurtes (2) mit einer profilartigen Struktur versehen ist.

4. Montageanordnung nach einem der Ansprüche 1 bis 3,
**dadurch gekennzeichnet,**
**dass** mindestens ein Gleittisch (8) seitlich angebrachte Leisten (8a, 8b) aufweist.

## Claims

1. Mounting arrangement having at least one endless main belt (2) which serves as an "operator's belt" and
- which runs between a drive drum (4) and a tensioning drum (6) on at least one locationally fixed sliding table (8, ...), and
wherein at least one endless wear belt (20, ...) which runs along at the speed of the main belt (2) is arranged between the main belt (2) and the at least one sliding table (8, ...),
**characterized**
- **in that** if there is a single wear belt (20) and a single sliding table (8), said wear belt (20) is at least as wide as the sliding table (8),
- **in that** if there is a single wear belt (20) and a plurality of sliding tables (8, ...), said wear belt (20) is at least as wide as the widest of the sliding tables (8, ...),
- **in that** if there are a plurality of wear belts (20, ...) and a plurality of sliding tables (8, ...), the narrowest of the wear belts (20, ...) is at least as wide as the widest of the sliding tables (8, ...), and/or
- **in that** if there is a single wear belt (20), the main belt (2) is at least as wide as the wear belt (20), wherein the width of the wear belt (20) extends over the entire width of the main belt (2), and when there are a plurality of wear belts (20, ...) :
- **in that** the main belt (2) is at least as wide as the narrowest of the wear belts (20, ...), wherein the width of the narrowest of the wear belts (20, ...) extends over the entire width of the main belt (2), and
- **in that** at least one supporting roller (26, ...) is arranged between the drum end of the at least one wear belt (20, ... ) and the adjacent drive drum (4) and/or tensioning drum (6).

2. Mounting arrangement according to Claim 1, **characterized in that** a region of the main belt (2) which extends over the width of the at least one wear belt (20, ...) and over the width of the at least one sliding table (8, ...) is supported by supporting rollers or covered by tread strips.

3. Mounting arrangement according to one of Claims 1 to 2, **characterized in that** the running-end surface of the main belt (2) is provided with a profile-like structure.

4. Mounting arrangement according to one of Claims 1 to 3, **characterized in that** at least one sliding table (8) has laterally mounted strips (8a, 8b).

## Revendications

1. Agencement de montage comprenant au moins une courroie principale sans fin (2), servant de convoyeur à bande,
- qui s'étend entre un tambour d'entraînement (4) et un tambour de serrage (6) sur au moins un plateau coulissant fixe (8, ...), et
dans lequel entre la courroie principale (2) et l'au moins un plateau coulissant (8, ...) est disposée au moins une courroie d'usure sans fin (20, ...) entraînée à la vitesse de la courroie principale (2).
**caractérisé en ce que**
- dans le cas d'une courroie d'usure unique (20) et d'un plateau coulissant unique (8), cette courroie d'usure (20) est au moins aussi large que le plateau coulissant (8),
- dans le cas d'une courroie d'usure unique (20) et de plusieurs plateaux coulissants (8, ...), cette courroie d'usure (20) est au moins aussi large que le plateau coulissant (8,...) le plus large,
- dans le cas de plusieurs courroies d'usure (20, ...) et de plusieurs plateaux coulissants (8, ...), la courroie d'usure (20, ...) la plus étroite est au moins aussi large que le plateau coulissant (8,...) le plus large, et/ou
- dans le cas d'une courroie d'usure unique (20), la courroie principale (2) est au maximum aussi large que la courroie d'usure (20), la largeur de la courroie d'usure (20) s'étendant sur toute la largeur de la courroie principale (2), ou bien, dans le cas de plusieurs courroies d'usure (20, ...) :
- la courroie principale (2) est au maximum aussi large que la courroie d'usure (20, ...) la plus étroite, la largeur de la courroie d'usure (20, ...) la plus étroite s'étendant sur toute la largeur de la courroie principale (2) et
- entre l'extrémité côté tambour de l'au moins une courroie d'usure (20, ...) et le tambour d'entraînement (4) et/ou le tambour de serrage (6) adjacent est disposé au moins un rouleau de support (26, ...).

2. Agencement de montage selon la revendication 1, **caractérisé en ce**
**qu'**une région de la courroie principale (2) dépassant au-delà de la largeur de l'au moins une courroie d'usure (20,...) et au-delà de la largeur de l'au moins un plateau coulissant (8,...) est supportée par des rouleaux de support ou recouverte par des barres de déclenchement.

3. Agencement de montage selon l'une quelconque des revendications 1 à 2,
**caractérisé en ce que**
la surface côté courant de la courroie principale (2) est pourvue d'une structure profilée.

4. Agencement de montage selon l'une quelconque des revendications 1 à 3,
**caractérisé en ce que**
l'au moins un plateau coulissant (8) présente des baguettes (8a, 8b) montées latéralement.
